# EUROPÄISCHE PATENTSCHRIFT

(11) **EP 1 216 874 B1**
(45) Veröffentlichungstag und Bekanntmachung des Hinweises auf die Patenterteilung: **11.07.2007**
(21) Anmeldenummer: 01710057.9
(22) Anmeldetag: 24.11.2001
(51) Int. Cl.: B60K 15/035

(54) **Kraftstoffbehälter**
Fuel tank
Réservoir de carburant

(30) Priorität: 19.12.2000 DE 10063414
(43) Veröffentlichungstag der Anmeldung: 26.06.2002
(73) Patentinhaber: Kautex Textron GmbH & Co. KG., 53229 Bonn (DE)
(72) Erfinder: Schäfer, Thomas, 53227 Bonn (DE); Woblick, Holber, 53173 Bonn (DE); Hildebrand, Horst, 91735 Moor am See (DE)
(74) Vertreter: Kierdorf, Theodor

(56) Entgegenhaltungen:
- EP-A- 0 773 128
- WO-A1-00/63042
- FR-A1- 2 774 950
- US-A- 4 852 761
- US-B1- 6 182 693
- PATENT ABSTRACTS OF JAPAN Bd. 0081, Nr. 36 (M-304), 23. Juni 1984 (1984-06-23) & JP 59 034932 A (NISSAN JIDOSHA KK), 25. Februar 1984 (1984-02-25)

## Beschreibung

Die Erfindung betrifft einen Kraftstoffbehälter für ein KFZ, mit wenigstens einer Einfüllöffnung, wenigstens einer Kraftstoffförderpumpe, wenigstens einer Betriebsentlüftungseinrichtung und wenigstens einer Betankungsentlüftungseinrichtung, wobei die Entlüftungseinrichtungen, wobei die Entlüftungsventile über wenigstens eine Entlüftungsleitung an ein Kraftstoffdampffilter angeschlossen sind und dem Kraftstoffdampffilter wenigstens ein Ausperlbehälter vorgeschaltet ist.

Kraftstoffbehälter der eingangs genannten Art, die heutzutage üblicherweise ein- oder mehrteilig aus Kunststoff ausgebildet sind, sind hinsichtlich Kohlenwasserstoffemissionen optimierte Systeme. Es ist bekannt, dass bestimmte Kunststoffe, beispielsweise Polyethylen, für Kohlenwasserstoffe permeabel sind. Aus diesem Grunde werden Kraftstoffbehälter aus Kunststoff mehrwandig ausgebildet oder aus mehrschichtigen Extrudaten mit Barriereschichten für Kohlenwasserstoffe hergestellt. Es ist mittlerweile möglich, Kraftstoffbehälter aus Kunststoff für Kohlenwasserstoffe weitestgehend diffusionsdicht auszubilden. Mögliche Emissionsquellen für Kohlenwasserstoffe sind jedoch nach wie vor Anschlussnippel, Ventile, Schläuche, Montageöffnungen und dergleichen in der Tankwandung. Naturgemäß sind auch zu dem Kraftstoffbehälter führende und von diesem wegführende Leitungen mögliche Emissionsquellen. Es ist deshalb wünschenswert, an einem solchen Kraftstoffbehälter möglichst wenige Anschlüsse vorzusehen und möglichst viele sonstige Einrichtungen, die zur Sicherstellung einer Kraftstoffversorgung einer Brennkraftmaschine eines KFZ erforderlich sind, im Innern des Kraftstoffbehälters anzuordnen.

Darüber hinaus gilt es natürlich, den Montage- und Herstellungsaufwand für emissionsoptimierte Kraftstoffbehälter und Kraftstoffzufuhrsysteme in vertretbaren Grenzen zu halten, sei es bei ein- oder mehrteiligen Kraftstoffbehältern aus Kunststoff oder bei mehrteiligen Kraftstoffbehältern aus Metall.

Bei mehrteiligen Kraftstoffbehältern, die aus zwei oder mehreren Halbschalen bestehen, ist es naturgemäß mit verhältnismäßig geringem Montageaufwand verbunden, einen Großteil der Leitungen und sonstigen Einrichtungen zur Kraftstoffversorgung im Innern des Kraftstoffbehälters anzuordnen und zu fixieren. Bei einteiligen bzw. einstückigen extrusionsblasgeformten Kunststoffkraftstoffbehältern ist dies schwieriger. Bei solchen Kraftstoffbehältern müssen die Einbauten teilweise bei der Herstellung der Behälter umblasen werden oder durch gasdicht zu verschließende Montageöffnungen nachträglich eingesetzt werden.

Obwohl die Einbauten des Kraftstoffbehälters und die im Kraftstoffbehälter vorzusehenden Kraftstoffversorgungseinrichtungen auf Lebensdauer des Kraftstoffbehälters ausgelegt sein sollten, ist es trotzdem oftmals wünschenswert, die Anzahl der verwendeten Bauteile zu reduzieren sowie bestimmte Bauteile wie beispielsweise die Kraftstoffpumpe oder Kraftstofffördereinheit zu Reparatur- oder Wartungszwecken austauschbar zu gestalten.

Aus der EP 0 773 128 A2, die den Oberbegriff des Anspruchs 1 definiert, ist ein Betankungsentlüftungsventil für einen Kraftstofftank eines Kfz bekannt, bei dem das Ventilgehäuse so ausgebildet ist, dass flüssige Kohlenwasserstoffe während des Entlüftungsvorgangs nicht mitgerissen werden können (liquid trap).

Aus der FR 2 774 950 ist ein Kraftstoffdampffilter für den Kraftstoffbehälter eines Kraftfahrzeugs bekannt, welches als Einsatz in eine Ausnehmung der Wandung des Kraftstoffbehälters eingebettet ist und darüber hinaus verschiedene Ventile wie beispielsweise ein roll-over-Ventil umfasst, die integraler Bestandteil des Filtergehäuses sind.

Aus US 4,852,761 ist ein Kraftstoffdampffilter eines Kraftstoffbehälters für Kfz bekannt, das ein als Einsatz in den Behälter ausgebildetes Gehäuse umfasst. In dem Gehäuse ist ein von dem Kraftstoffdampffilter getrenntes Volumen zur Drainage von flüssigem Kraftstoff vorgesehen.

Der Erfindung liegt daher die Aufgabe zugrunde, einen Kraftstoffbehälter der eingangs genannten Art hinsichtlich dessen Emissionswerten zu verbessern sowie konstruktiv zu vereinfachen. Insbesondere sollen die emissionsbehafteten Verbindungsstellen und/oder Anschlussstellen eines solchen Kraftstoffbehälters reduziert werden.

Die Aufgabe wird mit den Merkmalen des Anspruchs 1 gelöst. Vorteilhafte Ausgestaltungen sind den Unteransprüchen zu entnehmen.

Die Zusammenfassung mehrerer Komponenten des Entlüftungssystems des Kraftstoffbehälters zu einer Einheit vereinfacht die Montage und minimiert die Zahl der Anschlussstellen des gesamten Entlüftungssystems. Wenn der Kraftstoffbehälter aus Kunststoff ausgebildet ist, welche Ausführung hier bevorzugt wird, wird durch die erfindungsgemäß vorgesehene Entlüftungseinheit die Zahl der Anschlussstellen und Schweißstellen des Entlüftungssystems reduziert. Ein weiterer Vorzug dieser Anordnung ist darin zu sehen, dass hierdurch ein bedeutender Anteil der Anschlussstellen in den Tank verlegt sind, was ganz beachtlich zur Reduzierung möglicher Kohlenwasserstoffemissionen führt.

Im Falle schadhafter Ventile in der Entlüftungseinheit können diese ausgewechselt werden, wenn die Entlüftungseinheit insgesamt lösbar und austauschbar in dem Kraftstoffbehälter angeordnet ist. Vorzugsweise ist die Entlüftungseinheit als eine Montageöffnung der Behälterwandung verschließender Einsatz ausgebildet.

Die Entlüftungseinheit kann beispielsweise einen Deckelverschluss aufweisen, der mit einem Deckelflansch gegen die Behälterwandung abgedichtet ist. Wie eingangs bereits erwähnt kann der Deckelflansch mit der Behälterwandung verschweißt sein. Alternativ kann vorgesehen sein, dass der Deckelflansch unter Zwischenlage einer oder mehrerer Dichtungen mittels einer Überwurfmutter gegen die Behälterwandungen verspannt ist. In diesem Fall ist in oder an der Behälterwandung ein entsprechender Gewindestutzen oder zusätzlicher Gewindering vorzusehen.

Durch den Deckelverschluss der Entlüftungseinheit können sowohl der Kraftstoffvorlauf des Kraftstofffördersystems und gegebenenfalls der Rücklauf hindurchgeführt sein. Auch können in diesem Kabeldurchführungen für die Kraftstoffförderpumpe, einen Geber und dergleichen vorgesehen sein. Dies hat den Vorzug, dass ein zusätzlicher Deckelverschluss und eine zusätzliche Montageöffnung für die Kraftstofffördereinheit eingespart werden können, wodurch ebenfalls die Anzahl von Unterbrechungen einer diffusionsdicht ausgeführten Behälterwandung reduziert wird. Die Kraftstofffördereinheit kann in diesem Falle durch die Montageöffnung für die Entlüftungseinheit in den Kraftstoffbehälter eingesetzt worden sein.

Zweckmäßigerweise ist der Deckelverschluss als Träger der Entlüftungseinheit ausgebildet.

Besonders vorteilhaft ist es, wenn in der Entlüftungseinheit wenigstens ein Überschlagventil (Roll-Over-Ventil) vorgesehen ist, das vorzugsweise in unmittelbarer Nähe des Deckelverschlusses angeordnet ist. Ein solches Roll-Over-Ventil wäre in Einbaulage des Tanks in etwa in dem oberen Drittel des sich an den Deckelverschluss anschließenden Ausperlbehälters angeordnet.

Weiterhin ist es zweckmäßig, in der Entlüftungseinheit wenigstens ein Sicherheits-Überdruckventil vorzusehen, welches eine Notentlüftung des Kraftstoffbehälters bei geschlossenen Betankungs- und Betriebsentlüftungsventilen ermöglicht. Ein solches Sicherheitsventil vermeidet beispielsweise den Aufbau eines Überdrucks im Kraftstoffbehälter im Falle der Übertankung. Es ist daher sinnvoll, das Sicherheitsventil an der Entlüftungseinheit so vorzusehen, dass dieses bei jeder möglichen Schräglage des Fahrzeugs in der Gasphase des Kraftstoffs angeordnet ist.

Vorzugsweise sind mehrere Betriebsentlüftungseinrichtungen über eine gemeinsame oder mehrere Entlüftungsleitungen an die Entlüftungseinheit angeschlossen. Die Entlüftungseinheit dient somit auch der Zusammenfassung aller Entlüftungswege des Kraftstoffbehälters.

Die Betriebsentlüftungseinrichtungen können als Betriebsentlüftungsventile mit oder ohne Druckhaltefunktion oder auch als einfache Entlüftungsnippel ausgeführt sein.

Zweckmäßigerweise ist die Betankungsentlüftungseinrichtung als Betankungsentlüftungsventil ausgebildet, es ist jedoch auch denkbar, zur Betätigung des Abschaltmechanismus des Zapfventils zur Beendung des Betankungsvorgangs ein Abschaltventil im Einfüllrohr des Kraftstoffbehälters vorzusehen, sodass die Betankungsentlüftungseinrichtung keine Abschaltfunktion und keine Druckhaltefunktion aufweisen muss.

Bei der bevorzugten Ausführungsform der Erfindung ist jedoch vorgesehen, die Betriebsentlüftungseinrichtungen als auch die Betankungsentlüftungseinrichtungen als Ventile auszubilden. Die Betriebsentlüftungseinrichtungen sind dabei sinnvollerweise so ausgelegt, dass diese bei anstehendem Kraftstoff schwimmerbetätigt schließen. Eine Druckhaltefunktion dieser Betriebsentlüftungsventile wird durch nachgeschaltete Überdruckventile gewährleistet.

Der Ausperlbehälter ist zweckmäßigerweise mit einem Labyrinth oder mit innenliegenden Prallwänden versehen, sodass die in den Kraftstoffdämpfen dispers enthaltenen flüssigen Kohlenwasserstoffe in dem Ausperlbehälter auskondensieren können. Der Ausperlbehälter ist vorzusehen, da im dynamischen Betrieb oder auch bei der Betankung des Kraftfahrzeugs nicht auszuschließen ist, dass ein Gemisch aus flüssigem und gasförmigem Kraftstoff über die Entlüftungsleitungen mitgeführt wird. Es soll möglichst vermieden werden, flüssige Kohlenwasserstoffe dem Kraftstoffdampffilter zuzuführen, da dies dessen Regenerierbarkeit beeinträchtigt. In der Regel wird ein solches Kraftstoffdampffilter als Aktivkohlefilter ausgeführt sein, das über die Verbrennungsluftzufuhr zum Motor regeneriert wird.

Erfindungsgemäß ist vorgesehen, dass das Betankungsentlüftungsventil unmittelbar unterhalb des Ausperlbehälters oder an diesem dem Ausperlbehälter vorgeschaltet angeordnet ist. Das das Betankungsentlüftungsventil umgebende Ventilgehäuse kann ebenso wie der Ausperlbehälter mit labyrinthartigen Einbauten versehen sein.

Da erfindungsgemäß der Ausperlbehälter in dem Kraftstoffbehälter angeordnet ist, ist nicht auszuschließen, dass bei hohem Kraftstofffüllstand kein oder nur ein geringer Niveauunterschied zwischen dem Flüssigkeitsspiegel im Ausperlbehälter und im Kraftstoffbehälter besteht. In diesem Falle ist es sinnvoll, wenn Mittel zur aktiven Entleerung des Ausperlbehälters in den Kraftstoffbehälter gegen ein Niveaugefälle oder bei geringem Niveauunterschied zwischen dem Füllstand des Kraftstoffbehälters und dem Füllstand des Ausperlbehälters vorgesehen sind. Dann können die Betriebsentlüftungseinrichtungen durchaus als Nippel ausgebildet sein, wobei in Kauf genommen werden kann, dass über die Entlüftungseinrichtungen eine gewisse Menge an flüssigen Kohlenwasserstoffen in den Ausperlbehälter gelangt. Der Ausperlbehälter kann von seinem Volumen so ausgelegt sein, dass die Mitführung von flüssigen Kohlenwasserstoffen durch die Entlüftungsleitungen in den Ausperlbehälter in gewissen Grenzen in Kauf genommen werden kann.

Zur aktiven Entleerung des Ausperlbehälters kann beispielsweise eine Ablaufleitung desselben an die Saugseite einer Pumpe, vorzugsweise einer Saugstrahlpumpe angeschlossen sein. Die Saugstrahlpumpe kann auf an sich bekannte Art und Weise über einen von dem zum Motor geförderten Kraftstoffstrom abgezweigten Teilstrom betrieben werden. Alternativ ist es möglich, beispielsweise bei Kraftstofffördersystemen mit Rücklauf vom Motor, die Saugstrahlpumpe über eben diesen Kraftstoffrücklauf zu betreiben. Sinnvollerweise ist zur Entleerung des Ausperlbehälters eine zusätzliche Saugstrahlpumpe vorzusehen. Je nach Ausbildung des Kraftstoffbehälters, der eine durchaus komplexe Struktur mit mehreren Füllniveaus aufweisen kann, sind ohnehin Saugstrahlpumpen zur Entleerung verschiedener Tankvolumina in das Reservoir einer Kraftstofffördereinheit vorzusehen.

Die Erfindung wird nachstehend anhand eines in den Zeichnungen dargestellten Ausführungsbeispiels erläutert.

Es zeigen:

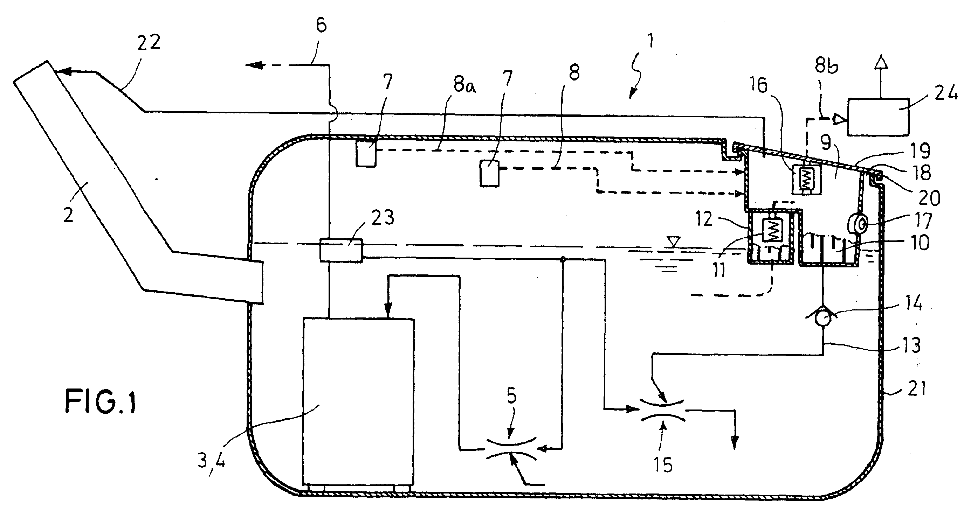

- Fig. 1: eine schematische Ansicht eines Kraftstoffbehälters gemäß der Erfindung bei Betrieb des KFZ und

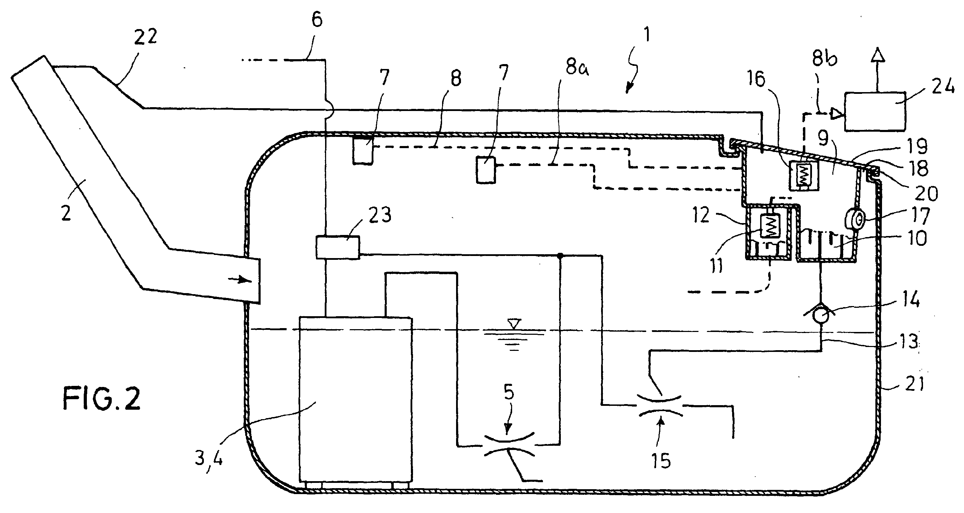

- Fig. 2: eine schematische Ansicht des in Fig. 1 dargestellten Kraftstoffbehälters während der Betankung.

Der in den Figuren dargestellte Kraftstoffbehälter 1, der nach dem Ausführungsbeispiel als durch Extrusionblasformen erhaltene Kunststoffkraftstoffbehälter ausgeführt sein soll, umfasst ein Einfüllrohr 2 bzw. einen Einfüllstutzen und eine in dem Kraftstoffbehälter angeordnete Kraftstofffördereinheit 3. Der Kraftstoffbeölter 1 kann allerdings auch aus Metall oder mehreren spritzgegossenen Kunststoffschalen bestehen. Die Kraftstofffördereinheit 3 besteht in bekannter Art und Weise aus einem Schwalltopf 4 als Reservoir und einer darin angeordneten und nicht dargestellten Förderpumpe. Eine erste Saugstrahlpumpe 5 fördert während des Betriebs des KFZ Kraftstoff aus dem freien Volumen des Kraftstoffbehälters in dem Schwalltopf 4. Von dort fördert die Kraftstoffförderpumpe den Kraftstoff über den mit 6 bezeichneten Kraftstoffvorlauf zum Motor bzw. zur Brennkraftmaschine des KFZ. Es sei an dieser Stelle angemerkt, dass es für die Erfindung ohne Belang ist, ob die Kraftstoffförderpumpe innerhalb oder außerhalb des Kraftstoffbehälters 1 angeordnet ist. Eine Anordnung innerhalb des Kraftstoffbehälters in der beschriebenen Art und Weise wird jedoch bevorzugt.

Es ist für den Fachmann selbstverständlich, dass in einem Kraftstoffbehälter Entlüftungseinrichtungen vorzusehen sind, die einerseits eine Entlüftung desselben bei der Betankung gewährleisten, andererseits eine ständige Entlüftung gewährleisten, da der Kraftstoff bei Schwallbewegungen im Kraftstoffbehälter 1 hervorgerufen durch die Fahrdynamik und durch Temperaturerhöhung ausgast. Nicht zuletzt muss der Kraftstoff sich auch aufgrund von Temperaturschwankungen ausdehnen können.

Zur sogenannten Betriebsentlüftung, d.h. zur Entlüftung des Kraftstoffbehälters 1 während des Fahrbetriebs sind in diesem in Einbaulage des Kraftstoffbehälters 1 im Bereich dessen oberer Wandung mit 7 bezeichnete Betriebsentlüftungseinrichtungen vorgesehen. In den Zeichnungen sind schematisch nur zwei Betriebsentlüftungseinrichtungen 7 dargestellt, es ist jedoch für den Fachmann ersichtlich, dass diese an verschiedensten Stellen in dem Kraftstoffbehälter möglichst in der Gasphase des Kraftstoffs, d.h. dem in Einbaulage oberen Behälterbereich nahe dessen oberer Wandung vorzusehen sind. Diese Betriebsentlüftungseinrichtungen 7 sind bei dem dargestellten Ausführungsbeispiel als Betriebsentlüftungsventile ausgeführt, die nur bei Überdruck in dem Kraftstoffbehälter 1 öffnen, jedoch bei anstehendem Kraftstoff, hervorgerufen durch Schwallbewegungen in dem Kraftstoffbehälter 1 schwimmerbetätigt schließen. Alternativ ist es möglich, diese Betriebsentlüftungseinrichtungen 7 als einfachen Nippel auszuführen. Diese sind über Entlüftungsleitungen 8a an eine mit 9 bezeichnete Entlüftungseinheit angeschlossen. Es ist selbstverständlich, dass sowohl mehrere Entlüftungsleitungen 8a als auch alternativ eine Sammelentlüftungsleitung vorgesehen sein können.

Die Entlüftungseinheit 9 umfasst einen Ausperlbehälter 10, der labyrinthartige Einbauten aufweist und an den alle innenliegenden Entlüftungsleitungen 8a angeschlossen sind. Weiterhin ist integraler Bestandteil der Entlüftungseinheit 9 ein Betankungsentlüftungsventil 11, das in einer Ventilkammer 12 angeordnet ist. Die Ventilkammer 12 ist unmittelbar an den Ausperlbehälter 10 angeschlossen. Bei dem dargestellten Ausführungsbeispiel kommuniziert die Ventilkammer 12 mit dem Ausperlbehälter 10 über das obenliegend angeordnete Betankungsentlüftungsventil 11. Das Betankungsentlüftungsventil 11 ist als federbelastetes Schwimmerventil ausgeführt, das im Fahrbetrieb üblicherweise geöffnet ist, wenn nicht das geplante maximale Füllniveau in dem Kraftstoffbehälter 1 erreicht ist. Bei ansteigendem Kraftstoffspiegel im Kraftstoffbehälter bei der Betankung wird der Schwimmer des Betankungsentlüftungsventils 11 in die Schließstellung gehoben, sodass sich bei der Betankung im Kraftstoffbehälter 1 ein Überdruck aufbaut, der zum Abschalten eines Zapfventils bei der Betankung führt. Wie eingangs bereits erwähnt, sind die Betriebsentlüftungseinrichtungen 7 als Ventile mit Druckhaltefunktion ausgeführt, um letztendlich den Druckanstieg innerhalb des Kraftstoffbehälters 1 zur Betätigung des Abschaltmechanismus eines Zapfventils zur Beendung des Betankungsvorgangs zu gewährleisten.

Der Ausperlbehälter 10 ist mit einer Ablaufleitung 13 versehen, die in den Kraftstoffbehälter 1 mündet und über die der Ausperlbehälter 10 in den Kraftstoffbehälter 1 entleerbar ist. Um ein Einströmen des Kraftstoffs aus dem Kraftstoffbehälter über die Ablaufleitung 13 in den Ausperlbehälter zu verhindern, ist in letzterer ein Rückschlagventil 14 vorgesehen.

Um bei hohem Füllstand in den Kraftstoffbehälter 1 eine sichere Entleerung des Ausperlbehälters 10 zu gewährleisten, ist die Ablaufleitung an die Saugseite einer zweiten Saugstrahlpumpe 15 angeschlossen.

Die Ausführungen der Saugstrahlpumpen 5, 15 ist dem Fachmann bekannt. Dennoch wird hier kurz auf deren Wirkungsweise eingegangen. Der Kraftstoffbehälter ist hier vereinfacht mit etwa rechteckigem Querschnitt dargestellt. Dieser kann jedoch vielfältige Gestalt mit verschiedenen Füllstandsniveaus bzw. verschiedenen Ebenen aufweisen. Üblicherweise dienen Saugstrahlpumpen dazu, Kraftstoff ständig aus dem Volumen des Kraftstoffbehälters in den Schwalltopf 4 zu fördern, sodass dessen ständige Befüllung und somit auch die Kraftstoffversorgung der Kraftstoffpumpe sichergestellt ist. Über die Saugstrahlpumpen wird durch einen sogenannten Treibstrahl des durch diese hindurchgeführten Kraftstoffs im Bereich einer Strömungsverengung nach Art einer Venturidüse einen Unterdruck erzeugt. In den Bereich des engsten Strömungsquerschnitts mündet eine Saugleitung unmittelbar oder in eine dort vorgesehene Saugkammer. In diesem Bereich wird der durch die Saugstrahlpumpe geführte Treibstrahl mit dem angesaugten Kraftstoffstrom vereinigt.

Wie vorstehend bereits erwähnt, sind in bekannten Kraftstoffbehältern zumeist mehrere solcher Saugstrahlpumpen vorgesehen. Im Falle eines rücklauflosen Kraftstofffördersystems, wie dies hier dargestellt ist, wird der Treibstrahl über ein Druckregelventil 23 aus dem Kraftstoffvorlauf 6 abgezweigt. Sowohl die erste Saugstrahlpumpe 5 als auch die zweite Saugstrahlpumpe 15 werden hierüber parallel angetrieben. Die zweite Saugstrahlpumpe 15 wirkt saugseitig über das Rückschlagventil 14 auf den Ausperlbehälter 10. Die erste Saugstrahlpumpe fördert, wie dies eingangs bereits beschrieben wurde, Kraftstoff aus dem Kraftstoffbehälter 1 in den Schwalltopf 4.

Von der Entlüftungseinheit 9 führt nur eine einzige Entlüftungsleitung 8b zu einem Kraftstoffdampffilter 24. Diesem Teil der Entlüftungsleitung 8b ist in der Entlüftungseinheit 9 bzw. in dem Ausperlbehälter 10 ein sogenanntes Roll-Over-Ventil oder auch Überschlagventil 16 vorgeschaltet. Das Überschlagventil 16 ist als Schwimmer und/oder Schwerkraftventil ausgeführt und dichtet das gesamte System im Falle des Überschlags des KFZ ab, dann nämlich spricht das Überschlagventil 16 schwerkraftbetätigt an. Weiterhin ist ein mit 17 bezeichnetes Sicherheitsventil vorgesehen, das beispielsweise im Falle der Übertankung des Kraftstoffbehälters 1 bei unzulässigem Überdruck eine Entlüftung desselben ermöglicht, und zwar dann, wenn die Betriebsentlüftungseinrichtungen 7 als auch das Betankungsentlüftungsventil 11 geschlossen sind.

Das Sicherheitsventil 17 ist in Einbaulage des Kraftstoffbehälters 1 und der Entlüftungseinheit 9 so angeordnet, dass sich dieses möglichst in der Gasphase des Kraftstoffs befindet, wenn die Betriebsentlüftungseinrichtungen 7 in Kraftstoff eingetaucht und geschlossen sind, um eine Entlüftung auch bei extremer Schräglage des Kraftstoffbehälters 1 zu gewährleisten.

Die Entlüftungseinheit 9 ist, wie dies auch den Figuren zu entnehmen ist, als eine Montageöffnung 18 des Kraftstoffbehälters 1 verschließende Funktionseinheit ausgebildet.

Bei dem dargestellten Ausführungsbeispiel ist die Montageöffnung 18 randseitig des Kraftstoffbehälters vorgesehen, diese kann aber auch zentral angeordnet sein. Die Entlüftungseinheit 9 ist mit einem außenliegenden Deckelverschluss 19 versehen, der die gesamte Anordnung bestehend aus Ausperlbehälter 10 und Ventilkammer 12 sowie der darin angeordneten Ventile als Baugruppe trägt. Der Deckelverschluss 19 liegt mit einem Deckelflansch 20 auf der äußeren Behälterwandung 21 auf. Der Deckelflansch 20 kann mit der Behälterwandung 21 verschweißt sein.

Alternativ kann zur Gewährleistung des Austauschs der Entlüftungseinheit 9 der Deckelverschluss 19 mit seinem Deckelflansch 20 beispielsweise mittels einer nicht dargestellten Überwurfmutter unter Zwischenlage wenigstens eines Dichtmittels gegen die Behälterwandung 21 verspannt sein. Der Verschluss kann vorteilhafterweise auch so ausgebildet sein, wie er in der US-Patentanmeldung Nr. 08/886.001 beschrieben ist, die hier vollinhaltlich zum Zwecke der Offenbarung einbezogen ist.

Schließlich ist in den Figuren eine mit 22 bezeichnete Druckleitung dargestellt, die eine Druckbeaufschlagung des Einfüllrohrs 2 über die Entlüftungseinheit 9 zu Diagnosezwecken (Dichtigkeitsprüfung OBD/on board diagnostics) gewährleistet.

In den Figuren ist das mit 14 bezeichnete Rückschlagventil außerhalb der Entlüftungseinheit eingezeichnet. Es ist jedoch für den Fachmann nachvollziehbar, dass dieses Rückschlagventil 14 auch integraler Bestandteil der Entlüftungseinheit 9 sein kann.

### Kraftstoffbehälter

### Bezugzeichenliste

- 1: Kraftstoffbehälter
- 2: Einfüllrohr
- 3: Kraftstofffördereinheit
- 4: Schwalltopf
- 5: erste Saugstrahlpumpe
- 6: Kraftstoffvorlauf
- 7: Betriebsentlüftungseinrichtung
- 8a, 8b: Entlüftungsleitungen
- 9: Entlüftungseinheit
- 10: Ausperlbehälter
- 11: Betankungsentlüftungsventil
- 12: Ventilkammer
- 13: Ablaufleitung
- 14: Rückschlagventil
- 15: Saugstrahlpumpe
- 16: Überschlagventil
- 17: Sicherheitsventil
- 18: Montageöffnung
- 19: Deckelverschluss
- 20: Deckelflansch
- 21: Behälterwandung
- 22: Druckleitung
- 23: Druckregelventil
- 24: Kraftstoffdampffilter

## Patentansprüche

1. Kraftstoffbehälter für ein Kfz, mit wenigstens einer Einfüllöffnung, wenigstens einer Kraftstoffförderpumpe (3), wenigstens einer Betriebsentlüftungseinrichtung (7) und wenigstens einem Betankungsentlüftungsventil (11), wobei die Entlüftungsventile bzw. Entlüftungseinrichtungen über wenigstens eine Entlüftungsleitung an ein Kraftstoffdampffilter (24) angeschlossen sind und dem Kraftstoffdampffilter (24) wenigstens ein Ausperlbehälter (10) vorgeschaltet ist, wobei wenigstens der Ausperlbehälter (10) und ein Betankungsentlüftungsventil (11) zu einer als Entlüftungseinheit (9) ausgebildeten Funktionseinheit zusammengefasst sind, **dadurch gekennzeichnet, dass** das wenigsten eine Betankungsentlüftungsventil (10) integraler Bestandteil der Entlüftungseinheit (9) ist und in einer Ventilkammer (12) angeordnet ist, die unmittelbar an den Ausperlbehälter (10) angeschlossen ist und dass die Entlüftungseinheit (9) lösbar und austauschbar in dem Kraftstoffbehälter (1) angeordnet ist.

2. Kraftstoffbehälter nach Anspruch 1 , **dadurch gekennzeichnet, dass** die Entlüftungseinheit (9) als eine Montageöffnung (18) der Behälterwandung (21) verschließender Einsatz ausgebildet ist.

3. Kraftstoffbehälter nach einem der Ansprüche 1 oder 2, **dadurch gekennzeichnet, dass** die Entlüftungseinheit (9) einen Deckelverschluss (19) aufweist, der mit einem Deckelflansch (20) gegen die Behälterwandung (21) abgedichtet ist.

4. Kraftstoffbehälter nach einem der Ansprüche 1 bis 3, **dadurch gekennzeichnet, dass** der Deckelverschluss (19) als Träger der Entlüftungseinheit (9) ausgebildet ist.

5. Kraftstoffbehälter nach einem der Ansprüche 1 bis 4, **dadurch gekennzeichnet, dass** in der Entlüftungseinheit (9) wenigstens ein Überschlagventil (16) vorgesehen ist.

6. Kraftstoffbehälter nach einem der Ansprüche 1 bis 5, **dadurch gekennzeichnet, dass** in der Entlüftungseinheit (9) wenigstens ein Sicherheits-Überdruckventil (17) vorgesehen ist, welches eine Notentlüftung des Kraftstoffbehälters (1) bei geschlossenen Betankungs- und Betriebsentlüftungseinrichtungen ermöglicht.

7. Kraftstoffbehälter nach einem der Ansprüche 1 bis 6, **dadurch gekennzeichnet, dass** mehrere Betriebsentlüftungseinrichtungen (7) über eine gemeinsame oder mehrere Entlüftungsleitungen (8a) an die Entlüftungseinheit (9) angeschlossen sind.

8. Kraftstoffbehälter nach Anspruch 1 bis 7, **dadurch gekennzeichnet, dass** Mittel zur aktiven Entleerung des Ausperlbehälters (10) in den Kraftstoffbehälter (1) gegen ein Niveaugefälle oder bei geringerem Niveauunterschied zwischen dem Füllstand des Kraftstoffbehälters (1) und dem Füllstand des Ausperlbehälters (10) vorgesehen ist.

9. Kraftstoffbehälter nach einem der Ansprüche 1 bis 8, **dadurch gekennzeichnet**, der Ausperlbehälter (10) über eine Ablaufleitung (13) an die Saugseite einer Pumpe, vorzugsweise einer Saugstrahlpumpe (15) angeschlossen ist.

## Claims

1. Fuel tank for a motor vehicle, with at least one filling opening, at least one fuel pump (3), at least one operational venting instrument (7) and at least one fuelling vent valve (11), the vent valves or venting instruments being connected via at least one venting line to a fuel vapour filter (24) and the fuel vapour filter (24) being preceded by at least one bubble extraction container (10), at least the bubble extraction container (10) and a fuelling vent valve (11) being combined to form a functional unit designed as a venting unit (9), **characterised in that** at least one fuelling vent valve (10) is an integral component of the venting unit (9) and is arranged in a valve chamber (12) which is connected directly to the bubble extraction container (10), and **in that** the venting unit (9) is arranged releasably and replaceably in the fuel tank (1).

2. Fuel tank according to Claim 1, **characterised in that** the venting unit (9) is formed as an insert which closes a mounting opening (18) of the container wall (21).

3. Fuel tank according to one of Claims 1 and 2, **characterised in that** the venting unit (9) comprises a lid closure (19), which is sealed by a lid flange (20) against the tank wall (21).

4. Fuel tank according to one of Claims 1 to 3, **characterised in that** the lid closure (19) is formed as a support of the venting unit (9).

5. Fuel tank according to one of Claims 1 to 4, **characterised in that** at least one roll-over valve (16) is provided in the venting unit (9).

6. Fuel tank according to one of Claims 1 to 5, **characterised in that** at least one safety pressure relief valve (17), which allows emergency venting of the fuel tank (1) when the fuelling and operational venting instruments are closed, is provided in the venting unit (9).

7. Fuel tank according to one of Claims 1 to 6, **characterised in that** a plurality of operational venting instruments (7) are connected via a common venting line or a plurality of venting lines (8a) to the venting unit (9).

8. Fuel tank according to one of Claims 1 to 7, **characterised in that** a means is provided for actively draining the bubble extraction container (10) into the fuel tank (1) against a level gradient or with a small level difference between the filling level of the fuel tank (1) and the filling level of the bubble extraction container (10).

9. Fuel tank according to one of Claims 1 to 8, **characterised in that** the bubble extraction container (10) is connected via a discharge line (13) to the intake side of a pump, preferably an ejector pump (15).

## Revendications

1. Réservoir de carburant pour un véhicule automobile avec au moins une ouverture de remplissage, au moins une pompe de refoulement du carburant (3), au moins un dispositif d'évacuation d'air de fonctionnement (7) et au moins un clapet d'évacuation d'air de ravitaillement (11), les clapets d'évacuation d'air ou les dispositifs d'évacuation d'air étant raccordés par le biais d'au moins d'une conduite d'évacuation d'air à un filtre à vapeur de carburant (24) et au moins un réservoir d'ébullition (10) étant placé en amont du filtre à vapeur de carburant (24), sachant qu'au moins le réservoir d'ébullition (10) et un clapet d'évacuation d'air de ravitaillement (11) sont réunis en une unité fonctionnelle réalisée en tant qu'unité d'évacuation d'air (9), **caractérisé en ce qu'**au moins un clapet d'évacuation d'air de ravitaillement (11) est partie intégrante de l'unité d'évacuation d'air (9) et est disposé dans une chambre de clapets (12), raccordée directement au réservoir d'ébullition (10) et **en ce que** l'unité d'évacuation d'air (9), échangeable, est disposée de façon amovible dans le réservoir de carburant (1).

2. Réservoir de carburant selon la revendication 1, **caractérisé en ce que** l'unité d'évacuation d'air (9) est réalisée en tant qu'insert obturant une ouverture de montage (18) de la paroi du réservoir (21).

3. Réservoir de carburant selon l'une quelconque des revendications 1 ou 2, **caractérisé en ce que** l'unité d'évacuation d'air (9) présente un dispositif de fermeture du couvercle (19) qui est étanché avec une bride de couvercle (20) de la paroi du réservoir (21).

4. Réservoir de carburant selon l'une quelconque des revendications 1 à 3, **caractérisé en ce que** le dispositif de fermeture du couvercle (19) est réalisé en tant que support de l'unité d'évacuation d'air (9).

5. Réservoir de carburant selon l'une quelconque des revendications 1 à 4, **caractérisé en ce qu'**il est prévu, dans l'unité d'évacuation d'air (9), au moins un clapet anti-renversement (16).

6. Réservoir de carburant selon l'une quelconque des revendications 1 à 5, **caractérisé en ce qu'**il est prévu, dans l'unité d'évacuation d'air (9), au moins une soupape de surpression de sécurité (17) laquelle permet une évacuation d'air de secours du réservoir de carburant (1) lorsque les dispositifs d'évacuation d'air de fonctionnement et d'évacuation d'air de ravitaillement sont fermés.

7. Réservoir de carburant selon l'une quelconque des revendications 1 à 6, **caractérisé en ce que** plusieurs dispositifs d'évacuation d'air de fonctionnement (7) sont raccordés à l'unité d'évacuation d'air (9) par le biais d'une conduite d'évacuation d'air commune ou plusieurs conduites d'évacuation d'air (8a).

8. Réservoir de carburant selon l'une quelconque des revendications 1 à 7, **caractérisé en ce que** sont prévus des moyens pour vider activement le réservoir d'ébullition (10) dans le réservoir de carburant (1) en raison d'une baisse de niveau ou en cas de faible différence de niveau entre le niveau de remplissage du réservoir de carburant (1) et le niveau de remplissage du réservoir d'ébullition (10).

9. Réservoir de carburant selon l'une quelconque des revendications 1 à 8, **caractérisé en ce que** le réservoir d'ébullition (10) est raccordé, par le biais d'une conduite d'écoulement (13), au côté aspiration d'une pompe, de préférence une pompe à jet aspirant (15).
